# EUROPEAN PATENT APPLICATION

(11) **EP 4 545 608 A1**
(43) Date of publication of application: **30.04.2025**
(21) Application number: 23827052.4
(22) Date of filing: 13.06.2023
(51) Int. Cl.: C09D 11/101

(54) **ACTINIC-RAY-CURABLE INK COMPOSITION**

(30) Priority: 23.06.2022 JP 2022101382
(71) Applicant: Sakata INX Corporation, Osaka-shi, Osaka 550-0002 (JP)
(72) Inventor: HISHINUMA, Keishiro, Osaka-shi, Osaka 550-0002 (JP); OMI, Naoki, Osaka-shi, Osaka 550-0002 (JP); SHIMOYAMA, Kohei, Osaka-shi, Osaka 550-0002 (JP); ITO, Aoi, Osaka-shi, Osaka 550-0002 (JP)
(74) Representative: V.O.
(86) International application number: PCT/JP2023/021871
(87) International publication number: WO 2023/248866

(57) **Abstract**

To provide an actinic-ray-curable ink composition having favorable fluidity and capable of imparting favorable dry-down and scratch resistance to a printed matter obtained by the use thereof while reducing the use of photopolymerization initiators by using monomers and oligomers that can be polymerized even without using a photopolymerization initiator and even while reducing the use of diallyl phthalate resin from an environmental perspective.
The above-described problem is solved by an actinic-ray-curable ink composition comprising a component (A) that is at least one polymer or resin selected from (A1) a polymer of allyl monomers, (A2) a rosin-modified resin, and (A3) a terpene monomer skeleton-containing resin, and a component (B) that is (B1) a monomer and/or an oligomer having an amine functional group and/or (B2) both a monomer and/or an oligomer not having an amine functional group but having an aryl ketone skeleton or an alkyl aryl ketone skeleton, and a polyether acrylate having an amine functional group.

## Description

### FIELD OF THE INVENTION

The present invention relates to an actinic-ray-curable ink composition.

### BACKGROUND ART

In the case of printing with an ink composition, various printing methods are appropriately selected in accordance with a material, a shape, and the like of a printed matter serving as a print target, and an ink composition having appropriate properties is selected in accordance with the printing method. Examples include selecting, for flat printing papers, an offset printing method that uses lithography and using, in this printing method, an offset printing ink composition having high viscosity and containing vegetable oil or mineral oil; selecting, for printing on corrugated paper, a flexographic printing method that uses a rubber letterpress and using, in this printing method, a water-based flexographic printing ink composition having remarkably high fluidity; and the like. In addition, as is well known, printing is performed by selecting, as appropriate, various printing methods, such as gravure printing, screen printing, typographic printing, and inkjet printing.

By the way, one of the important elements in printing is, along with adherence of the ink composition to the print target to form an image, the drying of the ink composition after printing. An ink composition immediately after printing is not sufficiently fixed to a surface of the printed body. This may lead to problems such as the ink composition adhering to fingers or the like when touched and the image becoming smudged and dirty when rubbed. Therefore, in a case in which the printed body after printing is to be transferred to a subsequent process, the ink composition needs to be sufficiently fixed to (that is, dried on) the surface of the printed body. The fixing (that is, drying) process of the ink composition after printing varies depending on the type of ink composition used. Examples include penetrating solvents into the printed body, evaporating solvents from the printed body, increasing a molecular weight based on oxidation of components contained in the ink composition, and the like. In any case, the drying process requires a considerable amount of time. With recent technological advancements leading to increased printing speeds, the time required for the drying process has also become a factor that cannot be ignored.

In this context, in recent years, printing using actinic-ray-curable ink compositions has also been underway. An actinic-ray-curable ink composition achieves drying through an increase in molecular weight of components contained in the ink composition by irradiation with ultraviolet rays or electron beams. The time required for this drying is significantly short, and thus printing using this ink composition can meet demands such as the prompt transfer of a printed matter to a subsequent process. An example of an ink composition corresponding to such a drying method is proposed in, for example, Patent Document 1 and the like.

By the way, in an actinic-ray-curable ink composition, it is common to use a photopolymerization initiator as part of the components thereof to produce radical species for polymerizing monomers and oligomers when irradiated with actinic energy rays. When irradiated with actinic energy rays, this photopolymerization initiator generates a low-molecular-weight decomposition product, and this decomposition product causes a distinctive odor in the printed matter after drying. From the perspective of reducing the odor of the printed matter, it is desirable to minimize the generation of such a decomposition product to the extent possible. As an example of a technology that addresses this, Patent Document 2 discloses that specific monomers and oligomers are used, making it possible to impart drying properties to an ink composition even without using a photopolymerization initiator. In the ink compositions described in Patent Document 2, the use of resins such as diallyl phthalate resin in addition to the above-described specific monomers and oligomers maintains performance such as pigment dispersibility and drying properties.

However, phthalic acid diallyl, which is used as a raw material in the manufacture of diallyl phthalate resin, is a phthalic acid ester and is one of the chemical substances that are a concern in terms of the effects thereof on the human body and the environment. Although the diallyl phthalate resin obtained by the polymerization thereof is harmless, it can be said that, as long as there are concerns regarding the raw materials, it is preferable to reduce use.

On the other hand, use of a polymer obtained by polymerizing an ester of a cycloalkanecarboxylic acid or a cycloalkenecarboxylic acid and an allyl alcohol (hereinafter also called an "allyl polymer") as one component in a photocurable resin composition applicable as an ink composition has been proposed (refer to, for example, Patent Document 3). The allyl polymer obtained from the allyl alcohol ester of cyclohexanedicarboxylic acid, which is one of the preferred examples in this document, corresponds to a cyclohexane replacement of the benzene ring in diallyl phthalate resin and, like diallyl phthalate resin, is expected to be used as a binder resin in actinic-ray-curable ink compositions. Then, the raw material thereof is not a phthalic acid ester, which is a concern for the human body and the environment, but a monocarboxylic acid ester or polycarboxylic acid ester of cycloalkane or cycloalkene, and thus alleviation of such concerns can be expected.

### PRIOR ART DOCUMENTSPatent Documents

| | |
|---|---|
| Patent Document 1: | Japanese Laid-Open Patent Application Publication No. 2015-193677 |
| Patent Document 2: | Japanese Patent No. 7062816 |
| Patent Document 3: | Japanese Laid-Open Patent Application Publication No. 2019-026675 |

### SUMMARY OF THE INVENTION

### Problems to be Solved by the Invention

According to studies of the present inventors, in a case in which the above-described specific monomers and oligomers are used to obtain an actinic-ray-curable ink composition that does not contain a photopolymerization initiator, the use of the allyl polymer described in Patent Document 3 as a binder resin was found to cause problems such as not only decreasing a fluidity of the ink composition and reducing printability, but also increasing dry-down and reducing scratch resistance in the printed matter obtained by printing using this ink. That is, when an alternative to diallyl phthalate resin is used in an actinic-ray-curable ink composition that does not contain a photopolymerization initiator, sufficient performance cannot be achieved.

The present invention has been made in light of the above circumstances and an object thereof is to provide an actinic-ray-curable ink composition having favorable fluidity and capable of imparting favorable dry-down and scratch resistance in a printed matter obtained by the use thereof while reducing the use of photopolymerization initiators by using monomers and oligomers that can be polymerized even without using a photopolymerization initiator and even while reducing the use of diallyl phthalate resin from an environmental perspective.

### Means for Solving the Problems

As a result of diligent studies to solve the problems described above, the present inventors have found that the problems described above can be solved by using a combination of a specific resin (component (A) described below) and a specific monomer and/or oligomer (component (B) described below), and have completed the present invention on the basis of such findings. Specifically, the present invention provides the following.

(1) According to an aspect of the present invention, an actinic-ray-curable ink composition comprises a component (A) that is at least one polymer or resin selected from (A1), (A2), and (A3) below and further includes a pigment dispersant in the case of (A1) being selected alone from among these three choices, a component (B) composed of (B1) and/or (B2) below, a compound having an ethylenically unsaturated bond and not being applicable to either the component (A) or the component (B), and a pigment. A content of the above-described component (B) is 15 mass% or greater of a total mass.
   (A1) A polymer of allyl monomers represented by general formula (1) below
   (A2) A rosin-modified resin
   (A3) A terpene monomer skeleton-containing resin
   (B1) A monomer and/or an oligomer having an amine functional group
   (B2) Both a monomer and/or an oligomer not having an amine functional group but having an aryl ketone skeleton or an alkyl aryl ketone skeleton, and a polyether acrylate having an amine functional group 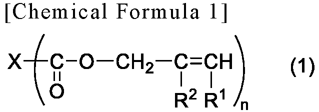 (In the above-described general formula (1), R¹ and R² are each independently a hydrogen atom or an alkyl group having 1 to 5 carbons, and X is an n-valent group composed of a 4- to 8-membered ring alicyclic skeleton, n being 2 or 3.)
(2) Further, according to an aspect of the present invention, in the actinic-ray-curable ink composition according to (1), the X in the above-described general formula (1) is a divalent group represented by any one of the following. 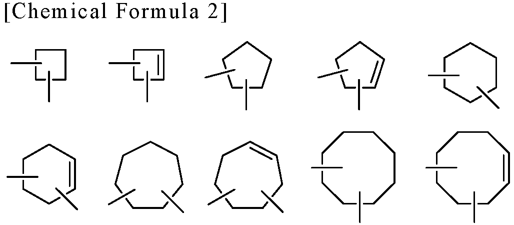
(3) Further, according to an aspect of the present invention, in the actinic-ray-curable ink composition according to (1) or (2), a weight-average molecular weight of the above-described (A2) and (A3) is 1,000 or greater and 100,000 or less.
(4) Further, according to an aspect of the present invention, in the actinic-ray-curable ink composition according to any one of (1) to (3), a total content of the above-described component (A) is 5 mass% to 20 mass% of the total mass.
(5) Further, according to an aspect of the present invention, in the actinic-ray-curable ink composition according to any one of (1) to (4), the above-described rosin-modified resin is a rosin-modified polyester resin.
(6) Further, according to an aspect of the present invention, in the actinic-ray-curable ink composition according to any one of (1) to (5), the X in the above-described general formula (1) is a 1,2-cyclohexylene group.

### Effect of the Invention

According to the present invention, provided is an actinic-ray-curable ink composition having favorable fluidity and capable of imparting favorable dry-down and scratch resistance in a printed matter obtained by the use thereof while reducing the use of photopolymerization initiators by using monomers and oligomers that can be polymerized even without using a photopolymerization initiator and even while reducing the use of diallyl phthalate resin from an environmental perspective.

### Embodiments of the Invention

Hereinafter, an embodiment of an actinic-ray-curable ink composition (hereinafter, abbreviated as "ink composition" as appropriate) of the present invention will be described. It should be noted that the present invention is not limited to the following embodiment, and can be implemented with appropriate modifications within the scope of the present invention.

The actinic-ray-curable ink composition of the present invention has the ability to cure upon irradiation with actinic energy rays such as ultraviolet rays and electron beams. As described later, the ink composition of the present invention contains a compound (monomers, oligomers, and the like) having an ethylenically unsaturated bond, and radicals produced in the ink composition when irradiated with actinic energy rays cause the compound having the ethylenically unsaturated bond to increase in molecular weight, thereby curing the ink composition. Therefore, when the ink composition that is sticky on the surface of the printed matter is irradiated with actinic energy rays immediately after printing, this ink composition instantly cures to form a film and is in a dry (tack-free) state. It should be noted that, in a case in which ultraviolet rays are used as the actinic energy rays, a component (B) described later acts as a photopolymerization initiator, and this component (B) produces radicals and exhibits sensitization effects by irradiation with the ultraviolet rays, thereby curing the ink composition. Further, in a case in which electron beams are used as the actinic energy rays, the various components contained in the ink composition produce radicals by undergoing intramolecular cleavage by irradiation with the electron beams, thereby curing the ink composition. Accordingly, the ink composition of the present invention may not necessarily contain a photopolymerization initiator as a constituent component, but a photopolymerization initiator may be used as appropriate as needed.

The actinic energy rays used to cure the ink composition of the present invention are exemplified by ultraviolet rays, electron beam, and the like. Among these, ultraviolet rays are preferably exemplified as the actinic energy rays from the perspective of device cost and ease of handling. However, in recent years, the introduction of electron beam generators into printing device has also progressed and, from such a perspective, electron beams are also preferably exemplified as the actinic energy rays. In a case in which ultraviolet rays are used as the actinic energy rays, a wavelength thereof may be determined as appropriate to match an absorption wavelength of the photopolymerization initiator used, but examples include 400 nm or less. Ultraviolet irradiation devices that produce such ultraviolet rays may include metal halide lamps, high-pressure mercury lamps, excimer lamps containing rare gases, ultraviolet light-emitting diodes (LEDs), and the like. In a case in which electron beams are used as the actinic energy rays, the irradiation device used to emit the electron beams is not particularly limited. Such irradiation devices include a Cockcroft-Walton-type device, a Van de Graaff-type device, a resonant transformer-type device, and the like. An energy of the electron beams is preferably 50 to 1,000 eV, and more preferably 100 to 300 eV. Regardless of the actinic energy rays used, an amount of irradiation thereof is adjusted as appropriate while monitoring a degree of curing of the ink composition.

The type of printing method to which the ink composition of the present invention is applied is not particularly limited. Such printing methods include offset printing, waterless offset printing, typographic printing, rubber letterpress printing, flexographic printing, gravure printing, inkjet printing, and the like. It should be noted that properties of the ink composition, such as viscosity, need only be set as appropriate in accordance with the printing method applied. Among these, offset printing, waterless offset printing, and the like are preferred as printing methods to which the present invention is applied.

The ink composition of the present invention is characterized by containing a component (A) that is at least one polymer or resin selected from (A1), (A2), and (A3) described later, the component (B) composed of (B1) and/or (B2) similarly described later, a compound having an ethylenically unsaturated bond and not being applicable to either the component (A) or the component (B), and a pigment, a content of the component (B) being 15 mass% or greater of a total mass. It should be noted that the ink composition of the present invention does not necessarily contain a photopolymerization initiator, but may contain one. Hereinafter, each component will be described.

### [Component (A)]

The component (A) is at least one polymer or resin selected from the (A1), the (A2), and the (A3) mentioned next and further includes a pigment dispersant in the case of the (A1) being selected alone from among these choices. The ink composition of the present invention contains such a component (A), making it possible to have favorable fluidity and achieve dry-down and scratch resistance in a printed matter obtained by the use thereof, while reducing the use of photopolymerization initiators in the ink composition and even while reducing the use of diallyl phthalate resin from an environmental perspective. Hereinafter, the component (A) will be described.

The (A1) is a polymer of allyl monomers represented by general formula (1) below.

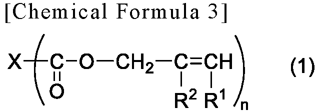

In the above-described general formula (1), R¹ and R² are each independently a hydrogen atom or an alkyl group having 1 to 5 carbons. It should be noted that, in this specification, "each independently" means that each is determined independently without relation to the other, and the two may be the same or may be different from each other. Such an alkyl group includes a methyl group, an ethyl group, a propyl group, an isopropyl group, a butyl group, a pentyl group, and the like. A preferred mode is R¹ and R² both being hydrogen atoms, but the mode is not particularly limited.

In the above-described general formula (1), n is 2 or 3, and X is an n-valent group composed of a 4- to 8-membered ring alicyclic skeleton. An "n-valent group composed of a 4- to 8-membered ring alicyclic skeleton" means an n-valent group in which, among the carbon atoms constituting an alicycle having 4 to 8 carbons, n carbon atoms have bonds extending to other groups. The alicycle is preferably cycloalkane or cycloalkene having 4 to 8 carbons. It should be noted that the X may be cross-linked within the molecule, and examples of the X cross-linked within the molecule include adamantane, norbornene, norbornane, and the like.

As a more specific mode, the X is preferably a divalent group represented by any one of the general formulas below. It should be noted that, in this case, the n in the above-described general formula (1) is 2.

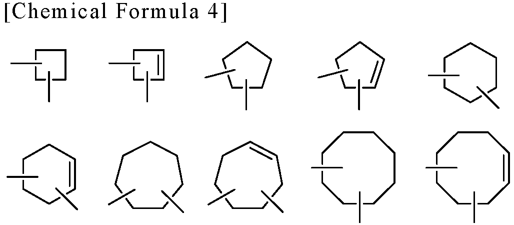

Among the Xs represented by the above-described general formula, a 1,2-cyclohexylene group is particularly preferred. In this case, the first and second positions of cyclohexane are substituted with the groups represented in the parentheses portion of the above-described general formula (1).

Preferred examples of allyl monomers represented by the above-described general formula (1) include 1,2-cyclohexanedicarboxylic acid diallyl, 1,3-cyclohexanedicarboxylic acid diallyl, 1,4-cyclohexanedicarboxylic acid diallyl, 4-cyclohexene-1,2-dicarboxylic acid diallyl, 2-cyclohexene-1,2-dicarboxylic acid diallyl, and the like. Among these, 1,2-cyclohexanedicarboxylic acid diallyl, 4-cyclohexene-1,2-dicarboxylic acid diallyl, and 1,4-cyclohexanedicarboxylic acid diallyl are more preferred, 1,2-cyclohexanedicarboxylic acid diallyl being even more preferred.

The allyl monomers represented by the above-described general formula (1) are obtained through esterification by dehydrating and condensing cycloalkanes or cycloalkenes having 4 to 8 carbons with two or three carboxy groups and allyl alcohol having the substituents R¹ and R². It should be noted that, as already mentioned, preferably the substituents R¹ and R² are both hydrogen atoms.

Further, to obtain a polymer by polymerizing an allyl monomer represented by the above-described general formula (1), this allyl monomer need only be polymerized by using a radical polymerization initiator. Such radical polymerization initiators include azo initiators such as azobisisobutyronitrile and 2,2'-azobisisobutyric acid dimethyl; peroxide initiators such as ketone peroxides, peroxy ketals, hydroperoxides, dialkyl peroxides, diacyl peroxides, peroxydicarbonates, peroxy esters, and benzoyl peroxide; and photopolymerization initiators of acetophenone types such as 2-methyl-1-[4-(methylthio)phenyl]-2-morpholinopropan-1-one and 1-hydroxycyclohexyl phenyl ketone, benzoin types such as benzoin and benzoin ethyl ether, benzophenone types such as benzophenone, phosphorus types such as acylphosphine oxides, sulfur types such as thioxanthone, and benzyl types such as benzyl and 9,10-phenanthrenequinone. These polymerization initiators can be used alone or in combination of two or more types.

An amount of polymerization initiator is preferably 5 parts by mass or less per 100 parts by mass of the allyl monomer represented by the general formula (1), more preferably 3 parts by mass or less, and even more preferably 0.001 to 3 parts by mass. Reaction temperatures during polymerization include about 60 to 240°C. Further, reaction times include about 0.1 to 100 hours.

It should be noted that, when obtaining a polymer by polymerizing an allyl monomer represented by the above-described general formula (1), the polymer may be a homopolymer that uses a single allyl monomer, or may be a copolymer that combines a plurality of types of allyl monomers and other monomers. The most preferred mode is a homopolymer of 1,2-cyclohexanedicarboxylic acid diallyl, but the mode is not particularly limited.

A weight-average molecular weight of the polymer is preferably 300,000 or less, more preferably 200,000 or less, even more preferably about 2,000 to 150,000, and particularly preferably 5,000 to 140,000.

It should be noted that, as such polymers, polymers synthesized as described above may be used, or commercially available polymers may be obtained and used. Examples of such commercially available products include those manufactured by Osaka Soda Co., Ltd.

In a case in which the (A1) is selected as the component (A) alone, the component (A) further includes a pigment dispersant. That is, as described above, the component (A) is at least one selected from the (A1) as well as the components (A2) and (A3) described later, but in a case in which the (A1) is selected alone from among these, a pigment dispersant is further included as the component (A). It should be noted that, in a case in which the (A1) is used in combination with the (A2) and/or the (A3), the pigment dispersant may not necessarily be included as the component (A). It should be noted that a pigment dispersant may still be included as part of the component (A) even in this case. In a case in which the (A1) is used alone as the component (A), the ink composition tends to lack fluidity, and thus a pigment dispersant is used in combination to make up for this fluidity.

A pigment dispersant is a component used to improve a dispersibility of pigments in an ink composition, and such components may include, without particular restriction, those that have been used in the field of ink compositions to date. Examples of pigment dispersants include sorbitan fatty acid esters, partial fatty acid esters of polyacrylic acid, alkylamine fatty acid salts, alkyldiamines, and the like. However, the pigment dispersants need only have the ability to disperse pigments, and are not particularly limited thereto. Such pigment dispersants are commercially available, and examples include a Solsperse (product name) series manufactured by Lubrizol Corporation, a DISPERBYK (product name) series manufactured by BYK Japan, K.K., an Ajisper (product name) series manufactured by Ajinomoto Fine-Techno Co., Inc, an EFKA (product name) series manufactured by BASF SE, and the like.

A content of the pigment dispersant in the ink composition is preferably 0.5 to 5 mass%, more preferably 0.5 to 3 mass%, and even more preferably 0.5 to 1.5 mass%. Further, an amount of pigment dispersant added relative to the pigment contained in the ink composition is preferably 1 to 20 mass%, and more preferably 2 to 10 mass% with respect to the pigment.

The (A2) is a rosin-modified resin. Rosin-modified resins are resins prepared by modifying rosins. Such rosins include gum rosins, wood rosins, tall oil rosins, and the like containing resin acids such as abietic acid, palustric acid, neoabietic acid, pimaric acid, isopimaric acid, and dehydroabietic acid as a main component, and also include disproportionated rosins obtained by disproportionating these rosins, polymerized rosins obtained by dimerization or further polymerization, hydrogenated rosins obtained by hydrogenation, modified rosins obtained through modification by partially maleating and/or fumarating rosins, and the like. It should be noted that maleic anhydride is used to maleate rosin, and fumaric acid is used to fumarate rosin. An addition reaction of maleic anhydride and/or fumaric acid to rosin can be carried out using a known method. For example, the addition reaction can be implemented by heating and melting the raw material rosin and then adding maleic anhydride and/or fumaric acid thereto. Further, the reaction can also be carried out under pressure or under normal pressure.

The rosin-modified resin need only have a monomer structure based on rosin, and is exemplified by rosin-modified alkyd resins, rosin-modified polyester resins, rosin-modified maleic acid resins (maleated rosin polyester), rosin-modified fumaric acid resin (fumarated rosin polyester), rosin-modified phthalic acid resin (phthalated rosin polyester), rosin-modified phenol resin, rosin-modified petroleum resin, and the like. All of these rosin-modified resins are commercially available and can be easily obtained. Examples of such commercially available products include Hartall R-WW, Haritack AQ-90A, and Harimack T-80 manufactured by Harima Chemicals, Inc., China Rosin WW and Malkyd 382 manufactured by Arakawa Chemical Industries, Ltd., and the like. As the rosin-modified resin, such commercially available products may be used, or a resin synthesized using a known method may be used.

A weight-average molecular weight of the rosin-modified resin is preferably 1,000 or greater and 100,000 or less. The weight-average molecular weight of the rosin-modified resin being 1,000 or greater is preferable as such a weight provides excellent pigment dispersibility and can impart favorable viscoelasticity to the ink composition. The weight-average molecular weight being 100,000 or less is preferable as such a weight provides favorable solubility and excellent handling properties. A more preferable weight-average molecular weight of the rosin-modified resin is about 5,000 or greater and 70,000 or less.

Among these, the rosin-modified polyester resin preferably used is preferably a condensation polymer of an acid component including resin acids, fatty acids, and polybasic acids, and polyhydric alcohols. An acid value of the rosin-modified polyester resin is preferably about 1 to 50 mgKOH/g. An acid value is 50 mgKOH or less, making it possible to suppress the occurrence of problems such as abnormal emulsification in offset printing ink compositions that apply this rosin-modified polyester resin. This acid value is preferably 1 to 25 mgKOH, and more preferably 1 to 10 mgKOH.

As described above, the rosin-modified polyester resin is preferably a condensation polymer of an acid component including resin acids, fatty acids, and polybasic acids, and polyhydric alcohols. Next, these components will be described.

The resin acids refer to abietic acids contained in rosins, isomers thereof, and derivatives of both thereof. Rosins are nonvolatile components of pine resin collected from plants of the pine family, and are mainly composed of the abietic acids and the isomers thereof. The abietic acids and the isomers thereof include abietic acid, neoabietic acid, palustric acid, pimaric acid, isopimaric acid, dehydroabietic acid, and the like, all of which have a carboxy group and can form the polyhydric alcohols and the esters described later. Such resin acids are introduced into the rosin-modified polyester resin, making it possible to improve an affinity with pigments and increase a proportion of biomass-derived components in the rosin-modified polyester resin obtained.

Although the abietic acids and the isomers thereof described above include only one carboxyl group, it is possible to introduce a plurality of carboxyl groups by modification thereof. For example, an abietic acid is a trans-diene compound, but can be isomerized to a cis-diene compound by being heated. By carrying out a Diels-Alder reaction between the cis-diene compound thus obtained and a dienophile compound having a plurality of carboxyl groups, such as maleic acid or 1,2-cyclohexenedicarboxylic acid, it is possible to introduce a plurality of carboxyl groups into the abietic acid skeleton. Further, polymerized rosin is synthesized by polymerizing a plurality of molecules of the abietic acids or the isomers thereof, and such compounds also have a plurality of carboxyl groups. The derivatives of the above-described abietic acids and isomers thereof refer to these compounds.

Rosins are mainly composed of resin acids, and thus rosin itself may be used instead of the above-described resin acids. A plurality of types of rosins are known, differing in manufacturing method, subsequent chemical treatment, and the like, but any type of rosin may be used. Such rosins include gum rosin, wood rosin, tall rosin, disproportionated rosin, hydrogenated rosin, polymerized rosin, and the like. Further, the rosins may be modified using a Diels-Alder reaction such as described above. It should be noted that, from the perspective of storage stability, rosins that chemically do not have or have few conjugated double bonds are preferably used. Such rosins include disproportionated rosins and hydrogenated rosins. However, rosins having conjugated double bonds, although slightly inferior in storage stability of the synthesized resin, can also be unproblematically used.

Fatty acids are obtained by hydrolyzing natural fats and oils such as vegetable oils and animal oils, and have a single carboxyl group, making it possible to form the polyhydric alcohols and the esters described later. Such fatty acids are introduced into the rosin-modified polyester resin, making it possible to increase the proportion of biomass-derived components in the rosin-modified polyester resin obtained. From such a perspective, the fatty acids are preferably used in such an amount that an oil length, which is a ratio (mass%) of the mass of the fatty acids to the mass of the resin as a whole, is about 30 to 85, and more preferably used in such an amount that an oil length is about 50 to 85.

The fatty acids include caprylic acids, pelargonic acids, capric acids, lauric acids, myristic acids, pentadecylic acids, palmitic acids, margaric acids, stearic acids, oleic acids, linoleic acids, arachidic acids, behenic acids, and the like. By the way, the fatty acid is a compound having a carboxyl group and a relatively high sp value. Among these fatty acids, the sp value tends to increase as the number of carbons decreases and, from such a perspective, fatty acids having 8 to 16 carbons can be preferably used, and fatty acids having 8 to 14 carbons can be more preferably used in the present invention. Further, the fatty acids may be unsaturated fatty acids or saturated fatty acids, but from the perspective of avoiding coloration due to deterioration and the like, those with one or less unsaturated bonds in the molecule are preferably used. It should be noted that, for fatty acids with two or more unsaturated bonds, such as oleic acid, linoleic acid, and eleostearic acid, desirably those in which the double bond portion has been eliminated by epoxidation through oxidation treatment are used. Such modified fatty acids can also be used as the fatty acids in the present invention. These fatty acids can be used alone or in combination of two or more types.

Polybasic acids are compounds having a plurality of carboxyl groups, and are components for increasing molecular weight through condensation polymerization with the polyhydric alcohols described later. As the compounds having a plurality of carboxyl groups, those that have been used in the synthesis of alkyd resins can be used without restriction, and the compounds may have two or three or more carboxyl groups or may be acid anhydrides thereof.

Such compounds include phthalic anhydride, isophthalic acid, terephthalic acid, adipic acid, trimellitic acid, 1,2-cyclohexanedicarboxylic acid, 1,3-cyclohexenedicarboxylic acid, 1,4-cyclohexenedicarboxylic acid, hexahydrophthalic anhydride, 5 -sodiosulfoisophthalic acid, fumaric acid, benzoic acid, tert-butyl benzoic acid, tetrahydrophthalic anhydride, maleic anhydride, succinic acid, succinic anhydride, fumaric acid, sebacic acid, azelaic acid, tetrabromophthalic anhydride, methylnadic anhydride, tetrachlorophthalic anhydride, hexahydrophthalic anhydride, pyromellitic anhydride, trimellitic anhydride, methylcyclohexenedicarboxylic acid anhydride, and the like. These can be used alone or in combination of two or more types.

Polyhydric alcohols form esters with acid components, including the resin acids, fatty acids, and polybasic acids already described, and increase the molecular weight of these components. As the polyhydric alcohols, those that have been used in the synthesis of alkyd resins to date can be used without restriction, and the alcohols include compounds having two or three or more hydroxyl groups.

Such compounds include ethylene glycol, 1,3-propanediol, 1,2-propanediol, 1,4-butanediol, diethylene glycol, triethylene glycol, polyethylene glycol, dipropylene glycol, 1,3-butanediol, neopentyl glycol, spiroglycol, dioxane glycol, adamantane diol, 3-methyl-1,5-pentanediol, methyloctanediol, 1,6-hexanediol, 1,4-cyclohexanedimethanol, 2-methylpropanediol 1,3, 3-methylpentanediol 1,5, hexamethylene glycol, octylene glycol, 9-nonanediol, 2,4-diethyl-1,5-pentanediol, ethylene oxide-modified compounds of bifunctional phenols such as bisphenol A, propylene oxide-modified compounds of bifunctional phenols such as bisphenol A, ethylene oxide and propylene oxide copolymer-modified compounds of bisphenol A, polyether polyols, polycarbonate diols, adamantane diols, polyether diols, polyester diols, and polycaprolactone diols of ethylene oxide and propylene oxide copolymerization systems, and the like. These can be used alone or in combination of two or more types.

To adjust the molecular weight of the rosin-modified polyester resin, a monobasic acid other than a fatty acid may be added as an acid component. Such monobasic acids include benzoic acid, acetic acid, propionic acid, butyric acid, and the like.

Next, a method for preparing the rosin-modified polyester resin using these materials will be described. The rosin-modified polyester resin is prepared by reacting the acid component including resin acids, fatty acids, and polybasic acids, and the polyhydric alcohols. The reaction procedure includes methods such as adding a small amount of solvent, such as xylene, to these raw materials placed in a reaction vessel with an inert gas, such as nitrogen gas, introduced thereto, and heating the mixture to cause azeotropy with condensation water, thereby causing condensation polymerization while removing the water. A reaction temperature is about 170 to 250°C, and a reaction time is about 5 to 25 hours, but both are not particularly limited. The end of the reaction can be determined by monitoring the acid value of the reaction mixture as the reaction time progresses. That is, the reaction completion may be determined when the acid value of the reaction mixture stops decreasing in association with the condensation polymerization. The condensation polymerization reaction can be shortened by distilling the water produced by condensation polymerization from the system or using a reaction catalyst. The reaction catalysts include tetrabutylzirconate, monobutyltin oxide (monobutyl tin oxide), zirconium naphthate, tetrabutyl titanate, and the like.

The (A3) is a terpene monomer skeleton-containing resin. The terpene monomer skeleton-containing resins are resins having a terpene-derived structure within a structure thereof, and such resins include terpene resins prepared by polymerizing only terpene monomers, various resins obtained by polymerizing terpene monomers in combination with other monomer components, and the like.

The terpene monomers, also called terpene compounds, have unsaturated bonds in the molecules thereof, and thus can polymerize by themselves or with other monomers to form polymers. As such terpene monomers, α-pinene, β-pinene, carene, α-terpinene, v-terpinene, d-limonene, dipentene, terpinolene, α-phellandrene, β-phellandrene, paramenthadienes, pyronene, camphene, alloocimene, myrcene, and the like can be used. Preferably, such terepene monomers include d-limonene, dipentene, α-phellandrene, β-phellandrene, α-terpinene, and the like. The terpene monomers may be used alone or in combination of two or more types.

Other monomer components that can be used in combination with terpene monomers include unsaturated dicarboxylic acids, unsaturated dicarboxylic acid anhydrides, unsaturated dicarboxylic acid dialkyl esters, phenols, acrylates, vinyl compounds such as styrene, and the like. These monomer components polymerize with terpene monomers through cycloaddition reactions such as Diels-Alder reactions, radical polymerization reactions, cationic polymerization reactions, and the like. It should be noted that the above-described unsaturated dicarboxylic acids include maleic acid, fumaric acid, and the like.

Examples of terpene monomer skeleton-containing resins include terpene resins, aromatic modified terpene resins, terpene phenol resins, hydrogenated terpene phenol resins, and the like. These are commercially available in various forms, and products manufactured by Yasuhara Chemical Co., Ltd., Arakawa Chemical Industries, Ltd., and the like, for example, can be obtained.

A weight-average molecular weight of the terpene monomer skeleton-containing resin is preferably 1,000 or greater and 100,000 or less. The weight-average molecular weight of the terpene monomer skeleton-containing resin being 1,000 or greater is preferable as such a weight provides excellent pigment dispersibility and can impart favorable viscoelasticity to the ink composition. The weight-average molecular weight being 100,000 or less is preferable as such a weight provides favorable solubility and excellent handling properties. A more preferable weight-average molecular weight of the terpene monomer skeleton-containing resin is about 5,000 or greater and 70,000 or less.

A content of the component (A) in the ink composition is preferably 5 to 40 mass%, more preferably 5 to 30 mass%, even more preferably 5 to 20 mass%, and particularly preferably 5 to 15 mass%.

### [Component (B)]

The component (B) is composed of the (B1) and/or the (B2) mentioned next. The component (B) is a compound or compound group having polymerizability with an ethylenically unsaturated bond and has a sensitization effect and radical-producing ability by irradiation with actinic energy rays. In a case in which a typical photopolymerization initiator is used, cleaved fragments (low molecular weight compounds) produced when this molecule cleaves and produces radicals remain in the cured film obtained by curing the ink composition and are gradually released from the film to the outside, causing odor generation and migration. On the other hand, in the component (B) used in the present invention, the cleaved fragments that remain after the radicals are produced have ethylenically unsaturated bonds, and thus polymerization occurs with components such as the monomers and the oligomers, increasing the molecular weight. In this case, the cleaved fragments are present in the polymer, and thus are not released from the cured film to the outside, suppressing odor generation and migration. Hereinafter, the component (B) will be described.

The (B1) is a monomer and/or an oligomer having an amine functional group. The amine functional group here refers to a primary, secondary, or tertiary amino group, and is preferably a tertiary amino group. That is, a monomer or an oligomer having an amine functional group is a monomer or an oligomer having a primary, secondary, or tertiary amino group attached thereto. Monomers or oligomers having an amine functional group include amine-modified monomers or oligomers, and specifically include aminoacrylate monomers, aminomethacrylate monomers, amine-modified polyester acrylates, amine-modified polyester methacrylates, amine-modified polyether acrylates, amine-modified polyether methacrylates, polyurethane acrylates, and the like. Amine-modified oligomers are obtained by, for example, a Michael addition reaction of primary amines and acrylates. Monomers and/or oligomers having an amine functional group produce radicals when irradiated with actinic energy rays.

Examples of the amine-modified oligomers include EBECRYL LEO 10101, EBECRYL 80, EBECRYL 81, EBECRYL 83, and EBECRYL 7100 manufactured by Daicel-Allnex Ltd.; ETERCURE 63922 manufactured by Eternal Materials Co., Ltd.; CN549NS, CN550, and CN551NS manufactured by Sartomer Chemicals Ltd.; PHOTOCRYL A104 and Miramer AS1000 manufactured by Miwon Chemicals Co., Ltd.; AgiSyn 701, AgiSyn 701P, AgiSyn 703, and AgiSyn 703TF manufactured by Koninklijke DSM N.V.; and the like.

The (B2) is both a monomer and/or an oligomer not having an amine functional group but having an aryl ketone skeleton or an alkyl aryl ketone skeleton, and a polyether acrylate having an amine functional group. That is, the (B2) includes both thereof.

Monomers and/or oligomers not having an amine functional group but having an aryl ketone skeleton or an alkyl aryl ketone skeleton have both the properties of a photopolymerization initiator and the properties of a monomer or an oligomer, and thus have self-curing properties associated with irradiation with actinic energy rays. It should be noted that "have self-curing properties" means having properties that facilitate curing without a photopolymerization initiator.

The monomers and/or oligomers not having an amine functional group but having an aryl ketone skeleton or an alkyl aryl ketone skeleton are not particularly limited as long as an aryl ketone skeleton or an alkyl aryl ketone skeleton is present, but include polyether acrylate, polyether methacrylate, polyester acrylate, polyester methacrylate, and polyurethane acrylate, which have these skeletons in molecules thereof.

The aryl ketone skeletons include skeletons represented by general formula (2) below. The aryl ketone skeletons in which R is an aryl group include benzophenone skeletons, benzophenone derivative skeletons, thioxanthone skeletons, thioxanthone derivative skeletons, anthraquinone skeletons, and anthraquinone derivative skeletons. The alkyl aryl ketone skeleton is a skeleton in which R is an alkyl group in skeleton represented by the general formula (2) below.

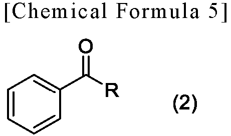

The benzophenone skeleton may have substituents. Such substituents are obtained by replacement of the hydrogen atoms bonded to the carbon atoms of the benzene ring of the benzophenone skeleton with other substituents. The substituents include, but are not limited to, alkyl groups having 1 to 6 carbons, alkyl groups having 1 to 6 carbons and including hetero atoms, and hetero atoms (for example, =O). Examples of the benzophenone derivative skeletons include those obtained by replacement of one or two carbon atoms of the benzene ring with hetero molecules. Hetero molecules include oxygen atoms, sulfur atoms, or nitrogen atoms.

The thioxanthone skeleton may have substituents. Such substituents are obtained by replacement of the hydrogen atoms bonded to the carbon atoms of the benzene ring of the thioxanthone skeleton with other substituents. The substituents include, but are not limited to, alkyl groups having 1 to 6 carbons, alkyl groups having 1 to 6 carbons and including hetero atoms, and hetero atoms (for example, =O). Examples of the thioxanthone derivative skeletons include those obtained by replacement of one or two carbon atoms of the benzene ring with hetero atoms. Hetero atoms include oxygen atoms, sulfur atoms, or nitrogen atoms.

The anthraquinone skeleton may have substituents. Such substituents are obtained by replacement of the hydrogen atoms bonded to the carbon atoms of the benzene ring of the anthraquinone skeleton with other substituents. The substituents include, but are not limited to, alkyl groups having 1 to 6 carbons, alkyl groups having 1 to 6 carbons and including hetero atoms, and hetero atoms (for example, =O). Examples of the anthraquinone derivative skeletons include those obtained by replacement of one or two carbon atoms of the benzene ring with hetero atoms. Hetero atoms include oxygen atoms, sulfur atoms, or nitrogen atoms.

The alkyl group in the alkyl aryl ketone skeleton includes alkyl groups having 1 to 6 carbons, or cycloalkyl groups having 3 to 8 carbons. Alkyl groups having 1 to 6 carbons include methyl groups, ethyl groups, propyl groups, butyl groups, pentyl groups, or hexyl groups. The cycloalkyl groups having 3 to 8 carbons include cyclopropyl groups, cyclobutyl groups, cyclopentyl groups, cyclohexyl groups, cycloheptyl groups, or cyclooctyl groups. The alkyl aryl ketone skeleton may have substituents. Such substituents are obtained by replacement of the hydrogen atoms bonded to the carbon atoms of the benzene ring group in the alkyl aryl ketone skeleton with other substituents. The substituents include, but are not limited to, alkyl groups having 1 to 6 carbons, alkyl groups having 1 to 6 carbons and including hetero atoms, and hetero atoms (for example, =O).

Examples of the monomers and/or oligomers not having an amine functional group but having an aryl ketone skeleton or an alkyl aryl ketone skeleton include EBECRYL LEO 10103 manufactured by Daicel-Allnex Ltd., and the like.

The polyether acrylate having an amine functional group is the polyether acrylate having an amine functional group mentioned above. Examples of such polyether acrylates include EBECRYL LEO 10551 manufactured by Daicel-Allnex Ltd., and the like.

A content of the component (B) in the ink composition is 15 mass% or greater. This content is preferably 15 to 40 mass%, more preferably 15 to 30 mass%, and even more preferably 15 to 20 mass%.

### [Compound Having Ethylenically Unsaturated Bond]

The ink composition of the present invention has an ethylenically unsaturated bond that is not applicable to either the above-described component (A) or component (B). Although some compounds selected as the above-described component (A) and component (B) also have ethylenically unsaturated bonds, the compound having an ethylenically unsaturated bond used here differs from those selected as the component (A) and the component (B).

The compound having an ethylenically unsaturated bond is a component that is polymerized into a higher molecular weight by radicals produced in the ink composition, and is called a monomer, an oligomer, or the like. Further, various polymers having ethylenically unsaturated bonds and a molecular weight higher than oligomers are commercially available. Such polymers can also be cross-linked with the above-described monomer or oligomer or with each other into a higher molecular weight. Here, such polymers may be used as the compound having an ethylenically unsaturated bond together with the above-described monomer or polymer. It should be noted that, as already mentioned, such radicals are produced by the above-described component (B) when irradiated with actinic energy rays.

The monomer is a component having an ethylenically unsaturated bond polymerized into a higher molecular weight as described above. However, before polymerization, the monomers are often liquid components having a relatively low molecular weight, are used as solvents when dissolving resin components to obtain varnishes, and are used for the purpose of adjusting the viscosity of ink compositions. The monomers include monofunctional monomers having one ethylenically unsaturated bond in the molecule and two or more functional monomers having two or more ethylenically unsaturated bonds in the molecule. The two or more functional monomers can crosslink molecules during the curing of the ink composition, thereby contributing to an increase in curing rate and formation of a rigid film. The monofunctional monomers have no crosslinking ability such as described above, but contribute to a reduction in curing contraction associated with crosslinking. These monomers can be used in combination of several types as necessary.

The monofunctional monomers include alkyl acrylates such as methyl (meth)acrylate, ethyl (meth)acrylate, butyl (meth)acrylate, hexyl (meth)acrylate, octyl (meth)acrylate, and dodecyl (meth)acrylate, (meth)acrylic acid, (meth)acrylate of ethylene oxide adduct, (meth)acrylate of propylene oxide adduct, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycererin mono(meth)acrylate, acryloyloxyethyl phthalate, 2-(meth)acryloyloxyethyl-2-hydroxyethyl phthalate, 2-(meth)acryloyloxypropyl phthalate, β-carboxyethyl (meth)acrylate, (meth)acrylic acid dimer, ω-carboxypolycaprolactone mono(meth)acrylate, dimethylaminoethyl (meth)acrylate, diethylaminoethyl (meth)acrylate, N-vinylpyrrolidone, N-vinylformamide, (meth)acryloylmorpholine, and the like. These monofunctional monomers can be used alone or in combination of two or more types. It should be noted that, in this specification, "(meth)acrylate" means "acrylate and/or methacrylate," and "(meth)acrylic acid" means "acrylic acid and/or methacrylic acid."

The two or more functional monomers include difunctional monomers such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 2-methyl-2,4-pentane di(meth)acrylate, 2,4-diethyl-1,5-pentanediol di(meth)acrylate, tricyclodecane dimethylol di(meth)acrylate, tricyclodecane dimethylol dicaplolactonate di(meth)acrylate, di(meth)acrylate of bisphenol A tetraethylene oxide adduct, di(meth)acrylate of bisphenol F tetraethylene oxide adduct, di(meth)acrylate of bisphenol S tetraethylene oxide adduct, di(meth)acrylate of hydrogenated bisphenol A tetraethylene oxide adduct, di(meth)acrylate of hydrogenated bisphenol F tetraethylene oxide adduct, hydrogenated bisphenol A di(meth)acrylate, hydrogenated bisphenol F di(meth)acrylate, dicaplolactonate di(meth)acrylate of bisphenol A tetraethylene oxide adduct, and dicaplolactonate di(meth)acrylate of bisphenol F tetraethylene oxide adduct; trifunctional monomers such as glycerin tri(meth)acrylate, trimethylolpropane tri(meth)acrylate, trimethylolpropane tricaplolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; four or more functional monomers such as trimethylolpropane tetra(meth)acrylate, pentaerythritol tetra(meth)acrylate, pentaerythritol tetracaplolactonate tetra(meth)acrylate, diglycerin tetra(meth)acrylate, ditrimethylolpropane tetra(meth)acrylate, ditrimethylolpropane tetracaplolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate; and the like. Among these, trimethylolpropane triacrylate (TMPTA; trifunction), ditrimethylolpropane tetraacrylate (Di-TMPTA; tetrafunction), dipentaerythritol hexaacrylate (DPHA; hexafunction), glycerin propoxytriacrylate (GPTA; trifunction), hexanediol diacrylate (HDDA; bifunction), and the like are preferred. These two or more functional monomers can be used alone or in combination of two or more types.

Further, another type of monomer is an epoxidized vegetable oil acrylate obtained through acrylic modification of epoxidized vegetable oil. This is a compound obtained by ring-opening addition of (meth)acrylic acid to epoxy groups of the epoxidized vegetable oil obtained through epoxidization of double bonds of unsaturated vegetable oil with an oxidizing agent such as peracetic acid or perbenzoic acid. The unsaturated vegetable oil is a triglyceride of at least one fatty acid having at least one carbon-carbon unsaturated bond, and is exemplified by hempseed oil, linseed oil, perilla oil, oiticica oil, olive oil, cacao oil, kapok oil, kaya oil, mustard oil, apricot kernel oil, tung oil, lumbang oil, walnut oil, poppy oil, sesame oil, safflower oil, radish seed oil, soybean oil, chaulmoogra oil, camellia oil, corn oil, rapeseed oil, niger oil, rice -bran oil, palm oil, castor oil, sunflower oil, grape seed oil, almond oil, pine seed oil, cottonseed oil, coconut oil, peanut oil, dehydrated castor oil, and the like. This type of monomer is derived from the vegetable oil and thus serves to increase the amount of biomass components in the ink composition. Various types of epoxidized vegetable oil acrylates are commercially available and thus such commercially available products may be used.

The oligomer is a component polymerized into a higher molecular weight as described above and inherently has a relatively high molecular weight, and thus is used for the purpose of imparting appropriate viscosity and elasticity to the ink composition. The oligomers include epoxy-modified (meth)acrylates exemplified by esters of (meth)acrylic acid and hydroxyl groups generated after the ring-opening of the epoxy groups included in epoxy compounds, such as epoxy resins, using acids or bases; rosin-modified epoxy acrylates; polyester-modified (meth)acrylates exemplified by esters of (meth)acrylic acid and terminal hydroxyl groups of condensation polymers of dibasic acids and diols; polyether-modified (meth)acrylates exemplified by esters of (meth)acrylic acid and terminal hydroxyl groups of polyether compounds; urethane-modified (meth)acrylates exemplified by esters of (meth)acrylic acid and terminal hydroxyl groups of condensates of polyisocyanate compounds and polyol compounds; and the like. Such oligomers are commercially available and can be obtained under product names such as, for example, an EBECRYL series manufactured by Daicel-Allnex Ltd.; CN and SR series manufactured by Sartomer Chemicals Ltd.; an ARONIX M-6000 series, an ARONIX M-7000 series, an ARONIX M-8000 series, an ARONIX M-1100, an ARONIX M-1200, and an ARONIX M-1600 manufactured by Toagosei Co., Ltd.; and NK Oligo manufactured by Shin-Nakamura Chemical Co., Ltd. These oligomers can be used alone or in combination of two or more types.

The polymer having an ethylenically unsaturated bond is a component that increases the molecular weight together with the monomers and oligomers mentioned above and has a high molecular weight even before irradiation with actinic energy rays, thereby assisting in the enhancement of the viscoelasticity of the ink composition. Such a polymer is used, for example, in a state of being dissolved or dispersed in a monomer that is a liquid having low viscosity. The polymers having an ethylenically unsaturated bond include acrylic resins having unreacted unsaturated groups, acryl-modified phenol resins, and the like.

A content of the compound having an ethylenically unsaturated bond and not applicable to either the above-described component (A) or component (B) in the ink composition is preferably 5 to 40 mass%, and more preferably 5 to 20 mass%. The content of the compound having an ethylenically unsaturated bond and not applicable to either the above-described component (A) or component (B) is within the range described above, making it possible to achieve both favorable curability and favorable printability. Further, a content of the polymer having an ethylenically unsaturated bond is preferably 0 to 50 mass%, more preferably 0 to 30 mass%, and even more preferably 0 to 20 mass%. The content of the polymer is within the range described above, making it possible to impart appropriate viscoelasticity to the ink composition and suppress the occurrence of misting and the like, as well as secure favorable curability of the ink composition, and thus such a content is preferred.

### [Pigment]

Pigments are components added to the ink composition of the present invention to impart coloring performance, concealing performance, and the like, and examples include colored pigments, white pigments, metal powders, and the like. Such pigments may include, without particular restriction, organic and/or inorganic pigments that have been used in ink compositions in the past.

The pigments are exemplified by yellow pigments such as Disazo Yellow (Pigment Yellow 12, Pigment Yellow 13, Pigment Yellow 14, Pigment Yellow 17, and Pigment Yellow 1) and Hansa Yellow; magenta pigments such as Brilliant Carmine 6B, Lake Red C, and Watching Red; cyan pigments such as phthalocyanine blue, phthalocyanine green, and alkali blue; black pigments such as carbon black; white pigments such as titanium oxide; metal powders such as aluminum paste and bronze powder; and the like.

A content of the pigment is exemplified by about 1 to 30 mass% with respect to the ink composition as a whole, but is not particularly limited. It should be noted that, in a case in which a colored ink composition is prepared, a coloring component of another color can be additionally used or an ink composition of another color can also be added as a complementary color.

### [Other Components]

In the ink composition of the present invention, other components can be added as needed, in addition to the components described above. Such components include extender pigments, polymerization inhibitors, salts such as phosphates, waxes such as polyethylene wax, olefin wax, and Fischer-Tropsch wax, alcohols, and the like.

The extender pigments are components that impart suitable characteristics, such as printability and viscoelasticity, to the ink composition, and various types typically used can be used in the preparation of an ink composition. Such extender pigments are exemplified by clay, kaolinite (kaolin), barium sulfate, magnesium sulfate, calcium carbonate, silicon oxide (silica), bentonite, talc, mica, titanium oxide, and the like. An added amount of such an extender pigment is exemplified by about 0 to 33 mass% with respect to the ink composition as a whole, but is not particularly limited.

The polymerization inhibitors can be preferably exemplified by phenol compounds such as butylhydroxytoluene, tocopherol acetate, nitrosamine, benzotriazole, hindered amine, and the like, and more preferably exemplified by, among these, butylhydroxytoluene. Such a polymerization inhibitor is added to the ink composition, making it possible to suppress an increase in viscosity in the ink composition due to the progression of the polymerization reaction during storage. A content of the polymerization inhibitor in the ink composition can be exemplified by about 0.01 to 1 mass%.

To manufacture the ink composition of the present invention using the components described above, a conventionally known method can be applied. Such a method can be exemplified by mixing the components described above, kneading the components with a bead mill, a three-roll mill, or the like to disperse the pigments (that is, the coloring components and the extender pigments), adding additives (polymerization inhibitors, alcohols, waxes, and the like) as necessary, and then adjusting the viscosity by further adding the above-described monomer components and oil components. The viscosity of the ink composition, in the case of offset printing, for example, can be exemplified by a value based on a Laray viscometer at 25°C being 10 to 70 Pa·s, but is not particularly limited. Examples

Hereinafter, the present invention will be described in further detail by way of examples, but is not be limited to these examples.

### [Preparation of Rosin-Modified Polyester Resin A]

Rosin-modified polyester resin A was prepared by adding, to a reaction vessel equipped with an agitator, a reflux condenser, and a thermometer, 125 parts by mass of epoxidized soybean oil, 375 parts by mass of disproportionated rosin (manufactured by FUJI FILM Wako Pure Chemical Corporation, product name: "Dehydroabietic Acid," acid value being 136 mgKOH/g), 1.5 parts by mass of triphenylphosphine, 25 parts by mass of 1,2-cyclohexenedicarboxylic acid, and 25 parts by mass of glycerin, and reacting the contents under a nitrogen atmosphere at 200°C for 5 hours to perform a condensation polymerization (dehydration condensation) reaction. The rosin-modified polyester resin A obtained had a weight-average molecular weight of 35,000 and an acid value of 3.5 mgKOH/g.

### [Preparation of Rosin-Modified Polyester Resin B]

Rosin-modified polyester resin B was prepared by adding, to a reaction vessel equipped with an agitator, a reflux condenser, and a thermometer, 125 parts by mass of coconut oil fatty acid, 375 parts by mass of disproportionated rosin (manufactured by FUJIFILM Wako Pure Chemical Corporation, product name: "Dehydroabietic Acid," acid value being 136 mgKOH/g), 1.5 parts by mass of triphenylphosphine, 25 parts by mass of 1,2-cyclohexenedicarboxylic acid, and 25 parts by mass of glycerin, and reacting the contents under a nitrogen atmosphere at 200°C for 5 hours to perform a condensation polymerization (dehydration condensation) reaction. The rosin-modified polyester resin B obtained had a weight-average molecular weight of 25,000 and an acid value of 3.0 mgKOH/g.

### [Preparation of Varnish 1]

Varnish 1 was obtained by adding, to a four-neck flask equipped with a cooling tube, a thermometer, and an agitator, 30 parts by mass of a polymer of 1,2-cyclohexanedicarboxylic acid diallyl (manufactured by Osaka Soda Co., Ltd., product name: RADPAR-AD032), 69.4 parts by mass of trimethylolpropane triacrylate (TMPTA), and 0.2 parts by mass of dibutylhydroxytoluene (BHT), and subsequently heating the contents to 140°C and maintaining the contents at that temperature for 50 minutes to dissolve the resin. Next, 0.4 parts by mass of aluminum ethylacetoacetate diisopropylate (ALCH, manufactured by Kawaken Fine Chemicals Co., Ltd.) was added to the reaction vessel, and the contents were heated to 170°C and maintained at that temperature for 60 minutes, thereby causing the contents to gel. Varnish 1 is a varnish containing a polymer of the allyl monomer represented by the above-described general formula (1), that is, the above-described (A1).

### [Preparation of Varnish 2]

Varnish 2 was obtained by the same procedure as that of Varnish 1, except that a polymer of isophthalic acid diallyl (manufactured by Osaka Soda Co., Ltd., product name: Daiso Iso Dap) was used instead of the polymer of 1,2-cyclohexanedicarboxylic acid diallyl. Varnish 2 is a varnish containing diallyl phthalate resin.

### [Preparation of Varnish 3]

Varnish 3 was obtained by the same procedure as that of Varnish 1, except that a polymer of phthalic acid diallyl (manufactured by Osaka Soda Co., Ltd., product name: Daiso Dap A) was used instead of the polymer of 1,2-cyclohexanedicarboxylic acid diallyl. Varnish 3 is a varnish containing diallyl phthalate resin.

### [Preparation of Varnish A]

Varnish A was obtained by the same procedure as that of Varnish 1, except that a polymer of the rosin-modified polyester resin A was used instead of the polymer of 1,2-cyclohexanedicarboxylic acid diallyl. Varnish A is a varnish containing rosin-modified resin, that is, the above-described (A2).

### [Preparation of Varnish B]

Varnish B was obtained by the same procedure as that of Varnish 1, except that a polymer of the rosin-modified polyester resin B was used instead of the polymer of 1,2-cyclohexanedicarboxylic acid diallyl. Varnish B is a varnish containing rosin-modified resin, that is, the above-described (A2).

### [Preparation of Varnish C]

Varnish C was obtained by the same procedure as that of Varnish 1, except that a terpene resin (manufactured by Yasuhara Chemical Co., Ltd., product name: YS Resin PX1000) was used instead of the polymer of 1,2-cyclohexanedicarboxylic acid diallyl. Varnish C is a varnish containing a terpene monomer skeleton-containing resin, that is, the above-described (A3).

Each of the ink compositions of Examples 1 to 19 and Comparative Examples 1 to 7 was prepared by mixing the components in accordance with the formulations shown in Tables 1 to 3, kneading the contents using a three-roll mill at a roll temperature of 40°C until the particle size became 5.0 µm or less, and adding, as necessary, 5 parts by mass of trimethylolpropane triacrylate (TMPTA) to adjust the viscosity to near 40 Pa·s. It should be noted that the formulation amounts in Tables 1 to 3 are in parts by mass.

It should be noted that the following is an explanation of the materials listed in Tables 1 to 3.

| | |
|---|---|
| Black pigment: | Carbon black (manufactured by Mitsubishi Chemical Corporation, product name: MA-70) |
| Yellow pigment: | Pigment Yellow 13 (manufactured by Clariant Chemicals Ltd., product name: BHS) |
| Red pigment: | Pigment Red 57:1 (manufactured by Clariant Chemicals Ltd., product name: L5B) |
| Indigo pigment: | Copper phthalocyanine pigment (manufactured by DIC Corporation, product name: FASTOGEN Blue FDB13) |
| (B1): | Oligomer having an amine functional group (manufactured by Daicel-Allnex Ltd., product name: EBECRYL LEO 10101; equivalent to the above-described (B1)) |
| (B2a): | Self-curing photopolymerizable oligomer not having an amine functional group but having an aryl ketone skeleton or an alkyl aryl ketone skeleton (manufactured by |
| Daicel-Allnex Ltd., product name: | EBECRYL LEO 10103; a combination with (B2b) below being equivalent to the above-described (B2)) |
| (B2b): | Polyether acrylate having an amine functional group (manufactured by Daicel-Allnex Ltd., product name: EBECRYL LEO 10551; a combination with the above-described (B2a) being equivalent to the above-described (B2)) |
| TMPTA: | Trimethylolpropane triacrylate |
| Pigment dispersant: | Basic dispersant having a comb-shaped structure (manufactured by |
| Lubrizol Corporation, product name: | Solsperse 39000) |
| Wax: | Polyethylene wax (manufactured by Morimura Chemicals Ltd., product name: NJ-100) |

### [Evaluation of Fluidity]

For each ink composition of the examples and comparative examples, a flow value was measured using a spread meter, and the fluidity was examined as a flow inclination (slope) value. It should be noted that the flow inclination value is a numerical value obtained by subtracting a spread diameter measured in mm after 10 seconds from a spread diameter measured in mm after 100 seconds using the spread meter. The larger this value, the better the fluidity. The evaluation criteria are as follows, and the results are shown in the "Fluidity" field of Tables 1 to 3.

| | |
|---|---|
| Very good (VG): | Flow inclination value of 4.0 or greater |
| Good (G): | Flow inclination value of 2.0 or greater and less than 4.0 |
| Poor (P): | Flow inclination value of less than 2.0 |

### [Dry-Down Evaluation 1]

A dry-down evaluation was conducted upon drying the contents using an ozoneless ultraviolet lamp. First, for each ink composition of the examples and comparative examples, a printed matter was fabricated by taking a 0.1-cc sample of the ink composition, spreading the sample on Aurora coated paper using an RI tester (two-split roll, manufactured by Akira Seisakusho Co., Ltd.), and immediately irradiating the sample with ultraviolet rays (ozoneless UV lamp manufactured by Eye Graphics Company, 120 W/cm², lamp-direct passing speed and number of passes: 130 m/min, 1 pass). A density of this printed matter was measured immediately after fabrication, and then measured again after being left indoors for 24 hours. The dry-down value was then obtained by subtracting the density value after 24 hours from the density value immediately after spreading. The evaluation criteria are as follows, and the results are shown in the "Dry-down 1" field of Tables 1 to 3. It should be noted that the density of the printed matter was measured using a SpectroEye densitometer manufactured by GretagMacbeth LLC.

| | |
|---|---|
| Very good (VG): | Dry-down value of -0.2 or greater (density reduction of 0.2 or less) |
| Poor (P): | Dry-down value of less than -0.2 (density reduction of greater than 0.2) |

### [Dry-Down Evaluation 2]

A dry-down evaluation was conducted upon drying the contents using a high-pressure mercury lamp. First, for each ink composition of the examples and comparative examples, a printed matter was fabricated by taking a 0.1-cc sample of the ink composition, spreading the sample on Aurora coated paper using an RI tester (two-split roll, manufactured by Akira Seisakusho Co., Ltd.), and immediately irradiating the sample with ultraviolet rays (high-pressure mercury lamp manufactured by Eye Graphics Company, 120 W/cm², lamp-direct passing speed and number of passes: 130 m/min, 3 passes). A density of this printed matter was measured immediately after fabrication, and then measured again after being left indoors for 24 hours. The dry-down value was then obtained by subtracting the density value after 24 hours from the density value immediately after spreading. The evaluation criteria are as follows, and the results are shown in the "Dry-down 2" field of Tables 1 to 3. It should be noted that the density of the printed matter was measured using a SpectroEye densitometer manufactured by GretagMacbeth LLC.

| | |
|---|---|
| Very good (VG): | Dry-down value of -0.2 or greater (density reduction of 0.2 or less) |
| Poor (P): | Dry-down value of less than -0.2 (density reduction of greater than 0.2) |

### [Scratch-Resistant Evaluation 1]

A scratch-resistant evaluation was conducted upon drying the contents using an ozoneless ultraviolet lamp. First, for each ink composition of the examples and comparative examples, a printed matter was fabricated by taking a 0.1-cc sample of the ink composition, spreading the sample on Aurora coated paper using an RI tester (two-split roll, manufactured by Akira Seisakusho Co., Ltd.), and immediately irradiating the sample with ultraviolet rays (ozoneless UV lamp manufactured by Eye Graphics Company, 120 W/cm², lamp-direct passing speed and number of passes: 130 m/min, 1 pass). The number of times the coating film of this printed matter could be rubbed with a fingernail before peeling off was then examined. The evaluation criteria are as follows, and the results are shown in the "Scratch-Resistant 1" field of Tables 1 to 3.

| | |
|---|---|
| Very Good (VG): | Coating film does not peel even after 10 rubs |
| Good (G): | Coating film peels after 6 to 9 rubs |
| Poor (P): | Coating film peels after 1 to 5 rubs |

### [Scratch-Resistant Evaluation 2]

A scratch-resistant evaluation was conducted upon drying the contents using a high-pressure mercury lamp. First, for each ink composition of the examples and comparative examples, a printed matter was fabricated by taking a 0.1-cc sample of the ink composition, spreading the sample on Aurora coated paper using an RI tester (two-split roll, manufactured by Akira Seisakusho Co., Ltd.), and immediately irradiating the sample with ultraviolet rays (high-pressure mercury lamp manufactured by Eye Graphics Company, 120 W/cm², lamp-direct passing speed and number of passes: 130 m/min, 3 passes). The number of times the coating film of this printed matter could be rubbed with a fingernail before peeling off was then examined. The evaluation criteria are as follows, and the results are shown in the "Scratch-Resistant 2" field of Tables 1 to 3.

| | |
|---|---|
| Very Good (VG): | Coating film does not peel even after 10 rubs |
| Good (G): | Coating film peels after 6 to 9 rubs |
| Poor (P): | Coating film peels after 1 to 5 rubs |

**[Table 1]**

| | Examples | | | | | | | | | |
|---|---|---|---|---|---|---|---|---|---|---|
| | 1 | 2 | 3 | 4 | 5 | 6 | 7 | 8 | 9 | 10 |
| Varnish 1 | 20 | 20 | 20 | 20 | 40 | | | | 20 | 20 |
| Varnish A | 20 | 20 | 20 | 20 | | 40 | | | | |
| Varnish B | | | | | | | 40 | | 20 | |
| Varnish C | | | | | | | | 40 | | 20 |
| Black pigment | 25 | | | | 25 | 25 | | | | 25 |
| Yellow pigment | | 12 | | | | | 12 | | | |
| Red pigment | | | 20 | | | | | 20 | | |
| Indigo pigment | | | | 20 | | | | | 20 | |
| (B1) | 20 | 20 | 20 | 20 | 20 | 20 | 20 | 20 | 20 | 20 |
| TMPTA | 10 | 23 | 15 | 15 | 9 | 10 | 23 | 15 | 15 | 10 |
| Pigment dispersant | | | | | 1 | | | | | |
| Wax | 5 | 5 | 5 | 5 | 5 | 5 | 5 | 5 | 5 | 5 |
| Total | 100 | 100 | 100 | 100 | 100 | 100 | 100 | 100 | 100 | 100 |
| Fluidity | VG | VG | VG | VG | VG | VG | VG | VG | VG | VG |
| Dry-down 1 | VG | VG | VG | VG | VG | VG | VG | VG | VG | VG |
| Dry-down 2 | VG | VG | VG | VG | VG | VG | VG | VG | VG | VG |
| Scratch-resistant 1 | VG | VG | VG | VG | VG | VG | VG | VG | VG | VG |
| Scratch-resistant 2 | VG | VG | VG | VG | VG | VG | VG | VG | VG | VG |

**[Table 2]**

| | Examples | | | | | | | | |
|---|---|---|---|---|---|---|---|---|---|
| | 11 | 12 | 13 | 14 | 15 | 16 | 17 | 18 | 19 |
| Varnish 1 | 20 | 20 | 20 | 20 | 20 | 20 | 20 | 20 | 20 |
| Varnish A | | | | | | | 20 | 20 | 20 |
| Varnish B | | | | 20 | | 10 | | | |
| Varnish C | 20 | 20 | 20 | | 20 | 10 | | | |
| Black pigment | | | | 25 | 25 | 25 | 25 | 25 | 25 |
| Yellow pigment | 12 | | | | | | | | |
| Red pigment | | 20 | | | | | | | |
| Indigo pigment | | | 20 | | | | | | |
| (B1) | 20 | 20 | 20 | 20 | 20 | 20 | 20 | | |
| (B2a) | | | | | | | | 10 | 5 |
| (B2b) | | | | | | | | 10 | 15 |
| TMPTA | 23 | 15 | 15 | 10 | 10 | 10 | 20 | 10 | 10 |
| Pigment dispersant | | | | | | | | | |
| Wax | 5 | 5 | 5 | 5 | 5 | 5 | 5 | 5 | 5 |
| Total | 100 | 100 | 100 | 100 | 100 | 100 | 100 | 100 | 100 |
| Fluidity | VG | VG | VG | VG | VG | VG | VG | VG | VG |
| Dry-down 1 | VG | VG | VG | VG | VG | VG | VG | VG | VG |
| Dry-down 2 | VG | VG | VG | VG | VG | VG | VG | VG | VG |
| Scratch-resistant 1 | VG | VG | VG | VG | VG | VG | VG | VG | VG |
| Scratch-resistant 2 | VG | VG | VG | VG | VG | VG | VG | VG | VG |

**[Table 3]**

| | Comparative Examples | | | | | | |
|---|---|---|---|---|---|---|---|
| | 1 | 2 | 3 | 4 | 5 | 6 | 7 |
| Varnish 1 | 40 | | | 20 | 20 | 20 | 20 |
| Varnish 2 | | 40 | | | | | |
| Varnish 3 | | | 40 | | | | |
| Varnish A | | | | 20 | 20 | 20 | 20 |
| Black pigment | 25 | 25 | 25 | 25 | 25 | 25 | 25 |
| Yellow pigment | | | | | | | |
| Red pigment | | | | | | | |
| Indigo pigment | | | | | | | |
| (B1) | 20 | 20 | 20 | 10 | | | |
| (B2a) | | | | | 5 | 20 | |
| (B2b) | | | | | 5 | | 20 |
| TMPTA | 10 | 10 | 10 | 20 | 20 | 10 | 10 |
| Pigment dispersant | | | | | | | |
| Wax | 5 | 5 | 5 | 5 | 5 | 5 | 5 |
| Total | 100 | 100 | 100 | 100 | 100 | 100 | 100 |
| Fluidity | G | G | G | G | G | VG | VG |
| Dry-down 1 | VG | VG | VG | VG | VG | P | P |
| Dry-down 2 | VG | VG | VG | VG | VG | P | P |
| Scratch-resistant 1 | VG | VG | VG | P | P | P | P |
| Scratch-resistant 2 | VG | VG | VG | P | P | P | P |

Upon comparison of the examples and comparative examples shown in Tables 1 to 3, it can be understood that the ink composition of the present invention has favorable characteristics even without using a diallyl phthalate resin and even without using a photopolymerization initiator.

## Claims

1. An actinic-ray-curable ink composition comprising:
a component (A) that is at least one polymer or resin selected from (A1), (A2), and (A3) below and further includes a pigment dispersant in the case of the (A1) being selected alone from among these choices;
a component (B) composed of (B1) and/or (B2) below;
a compound having an ethylenically unsaturated bond and not being applicable to either the component (A) or the component (B); and
a pigment,
a content of the component (B) being 15 mass% or greater of a total mass.
(A1) A polymer of allyl monomers represented by general formula (1) below
(A2) A rosin-modified resin
(A3) A terpene monomer skeleton-containing resin
(B1) A monomer and/or an oligomer having an amine functional group
(B2) Both a monomer and/or an oligomer not having an amine functional group but having an aryl ketone skeleton or an alkyl aryl ketone skeleton, and a polyether acrylate having an amine functional group 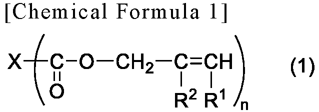
(In the above-described general formula (1), R¹ and R² are each independently a hydrogen atom or an alkyl group having 1 to 5 carbons, and X is an n-valent group composed of a 4- to 8-membered ring alicyclic skeleton, n being 2 or 3.)

2. The actinic-ray-curable ink composition according to claim 1, wherein
the X in the general formula (1) is a divalent group represented by any one of the following.

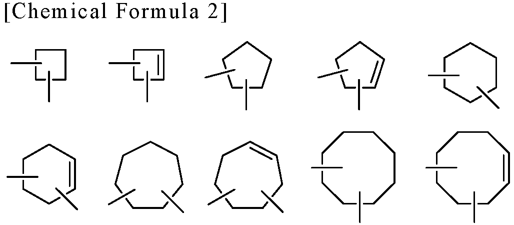

3. The actinic-ray-curable ink composition according to claim 1 or 2, wherein
a weight-average molecular weight of the (A2) and the (A3) is 1,000 or greater and 100,000 or less.

4. The actinic-ray-curable ink composition according to claim 1 or 2, wherein
a content of the component (A) is 5 mass% to 40 mass% of the total mass.

5. The actinic-ray-curable ink composition according to claim 1 or 2, wherein
the rosin-modified resin is a rosin-modified polyester resin.

6. The actinic-ray-curable ink composition according to claim 1 or 2, wherein
the X in the general formula (1) is a 1,2-cyclohexylene group.
